# EUROPÄISCHE PATENTSCHRIFT

(11) **EP 0 858 565 B1**
(45) Veröffentlichungstag und Bekanntmachung des Hinweises auf die Patenterteilung: **04.08.1999**
(21) Anmeldenummer: 96937305.9
(22) Anmeldetag: 01.11.1996
(51) Int. Cl.: F16K 11/22

(54) **GASEINLASSVORRICHTUNG FÜR EINE BESCHICHTUNGSANLAGE**
GAS INLET DEVICE FOR A COATING SYSTEM
DISPOSITIF D'ADMISSION DE GAZ POUR SYSTEME D'APPLICATION DE REVETEMENT

(30) Priorität: 02.11.1995 DE 19540771
(43) Veröffentlichungstag der Anmeldung: 19.08.1998
(73) Patentinhaber: AIXTRON Aktiengesellschaft, 52072 Aachen (DE)
(72) Erfinder: ROEHLE, Helmut, D-14089 Berlin (DE)
(74) Vertreter: Münich, Wilhelm, Dr.
(86) Internationale Anmeldenummer: EP9604729
(87) Internationale Veröffentlichungsnummer: WO9716664

(56) Entgegenhaltungen:
- EP-A- 0 337 180
- EP-A- 0 651 189
- WO-A-93/07451
- DE-C- 3 537 544

## Beschreibung

Die Erfindung betrifft eine Gaseinlaßvorrichtung für eine Beschichtungsanlage, die ein Gasreservoir aufweist, das über eine Speisekanalanordnung an einen Einspeiseraum angeschlossen ist, und deren Speisekanalanordnung vom Einspeiseraum aus durch eine zugeordnete Speiseventilanordnung verschließbar ist.

Eine derartige Gaseinlaßvorrichtung ist aus der Patentschrift DE 35 37 544 C1 bekannt. Diese Gaseinlaßvorrichtung umfaßt eine Kette aus Vierwegventilen, die jeweils einem Reaktionsgas zugeordnet sind. Die einzelnen Vierwegventile sind über je zwei Anschlüsse so untereinander verbunden, daß die von den Vierwegventilen gebildete Kette über einen ständig von Trägergas durchströmten Durchgangskanal verfügt, der den Einspeiseraum der Gaseinlaßvorrichtung darstellt. Der Durchgangskanal mündet in ein Reaktionsgefäß, in dem sich das zur Beschichtung vorgesehene Material befindet. An einen dritten Anschluß jedes Vierwegventils ist über eine Gasreservoirleitung das jedem Vierwegventil zugeordnete Gasreservoir angeschlossen. Ein vierter Anschluß des Vierwegventils ist mit einem Abluftkanal verbunden. Ein im Durchgangskanal angeordneter erster Ventilstößel dichtet die Gasreservoirleitung zum Durchgangskanal hin ab. Zum Abluftkanal hin ist die Gasreservoirleitung durch einen im Gegentakt zum ersten Ventilstößel arbeitenden zweiten Ventilstößel abgedichtet.

Die bekannte Gaseinlaßvorrichtung wird vor allem in Verfahren wie der Gasphasenepitaxie oder auch der Molekularstrahlepitaxie dazu verwendet, dem Reaktionsgefäß die zur Ausführung der Beschichtung benötigten Reaktionsgase zuzuführen. Von großer Wichtigkeit ist dabei, daß die Reaktionsgase mit großer mengenmäßiger und zeitlicher Genauigkeit in das Reaktionsgefäß eingeleitet werden.

Da der Gasstrom aus dem Gasreservoir durch den im Gegentakt arbeitenden ersten und zweiten Ventilstößel lediglich zwischen dem Durchgangskanal und dem Abluftkanal umgeschaltet wird, entstehen praktisch keine Druckschwankungen in der Gasreservoirleitung und im Gasreservoir. Darüber hinaus sind die Schaltverzögerungen aufgrund von Totvolumina zu vernachlässigen, da die Mündung der Reaktionsgasleitung in den Durchgangskanal durch den ersten Ventilstößel vom Durchgangskanal aus verschließbar ist und da die sich im Durchgangskanal befindenden Teile des Vierwegventils ständig vom Trägergas umspült werden.

Folglich lassen sich mit einer derartigen Gaseinlaßvorrichtung die Reaktionsgasströme zeitnah und mit hoher Genauigkeit schalten.

Ein Nachteil der bekannten Gaseinlaßvorrichtung ist jedoch der hohe Gasverlust, der dadurch entsteht, daß das Gas in die Abgasleitung umgelenkt wird, wenn der erste Stößel die Gasreservoirleitung gegen den Durchgangskanal abdichtet.

Ausgehend von diesem Stand der Technik, liegt der Erfindung die Aufgabe zugrunde, eine Gaseinlaßvorrichtung zu schaffen, mit der sich der Fluß des in die Versorgungsleitung einzuspeisenden Gases mit hoher Genauigkeit und zeitnah ohne nennenswerte Gasverluste schalten läßt.

Diese Aufgabe wird dadurch gelöst, daß die Speisekanalanordnung als Speisedrosselanordnung ausgebildet ist und daß der Gasdruck in dem Gasreservoir mit Hilfe eines den Gasdruck in dem Gasreservoir messenden Druckmessers und einer an eine Gasquelle angeschlossenen Regeldrosselanordnung, die von außen durch eine vom Druckmesser gesteuerte Regelventilanordnung verschließbar ist, einstellbar ist.

Dadurch, daß sowohl die Speiseventile der Speiseventilanordnung als auch die Regelventile der Regelventilanordnung das Gasreservoir von außen abschließen, wird das Volumen des Gasreservoirs durch die Schaltvorgänge der Regelventile und der Speiseventile nicht verändert. Folglich wird auch der Gasdruck im Gasreservoir durch ein Betätigen der Regelventile und der Speiseventile im wesentlichen nicht verändert. Dadurch ist es auf einfache Weise möglich, den Gasdruck im Gasreservoir mit Hilfe eines genauen Druckmessers und eines Reglers sehr genau konstant zu halten. Da das Gasreservoir unmittelbar über die Speisedrosseln mit dem Einspeiseraum verbunden ist, ergibt sich folglich im geöffneten Zustand der Speiseventile ein mit großer Genauigkeit bestimmter Gasfluß. Da außerdem keine Totvolumina vorhanden sind, läßt sich der Gasfluß nahezu augenblicklich ein- und ausschalten.

Bei einer bevorzugten Ausgestaltung umfaßt die Speiseventilanordnung eine Reihe von Speiseventilen, mit denen jeweils eine zugeordnete, das Gasreservoir mit dem Einspeiseraum verbindende Speisedrossel verschließbar ist. Dadurch ist es möglich, den Fluß des Gases aus dem Gasreservoir in dem Einspeiseraum auf mehrere stark unterschiedliche Flußwerte einzustellen oder den Fluß des Gases stufenweise zu schalten.

Nachfolgend werden Ausführungsbeispiele der Erfindung anhand der Zeichnung erläutert. Es zeigen:
- Fig. 1: ein Ausführungsbeispiel der Gaseinlaßvorrichtung gemäß der Erfindung;
- Fig. 2: ein weiteres Ausführungsbeispiel der Gaseinlaßvorrichtung, das gegenüber dem in Fig. 1 gezeigten Ausführungsbeispiel um ein Ablaßventil ergänzt ist; und
- Fig. 3: ein abgewandeltes Ausführungsbeispiel der Gaseinlaßvorrichtung mit mehreren Speiseventilen.

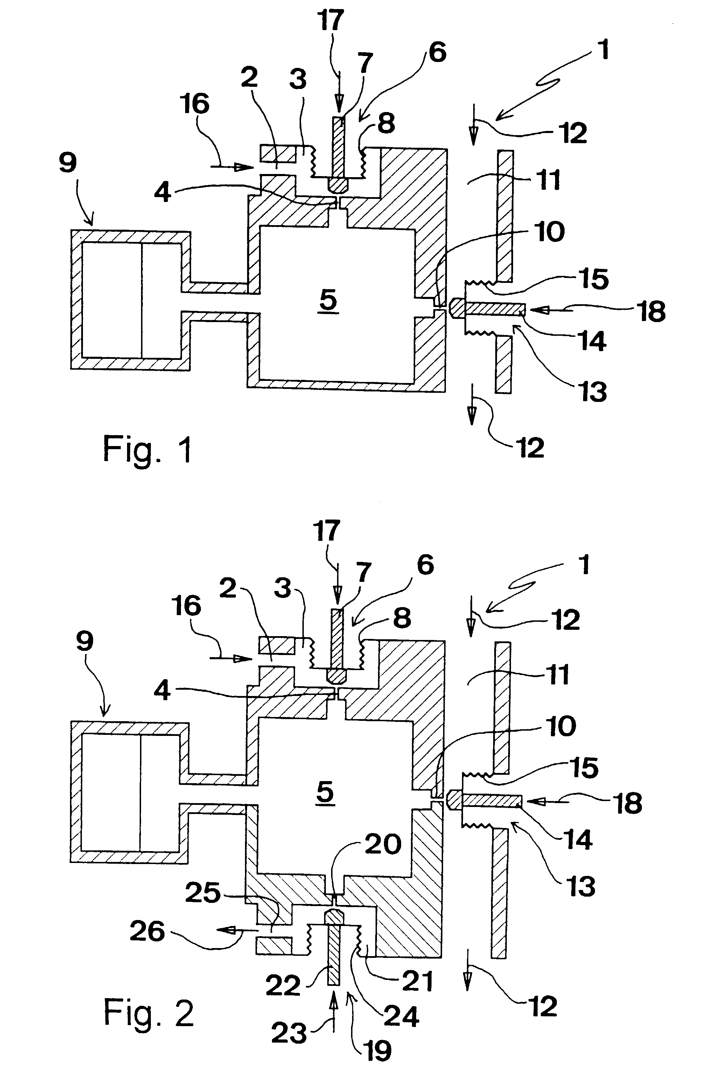

Fig. 1 zeigt eine Gaseinlaßvorrichtung 1, die über eine Zuleitung 2 an eine in der Zeichnung nicht dargestellte Gasquelle angeschlossen ist. Das Reaktionsgas aus der Gasquelle gelangt durch die Zuleitung 2 in eine Regelventilkammer 3 und von dort über eine Regeldrossel 4 in eine Vorkammer 5. Die der Vorkammer 5 abgewandte Eintrittsöffnung der Regeldrossel 4 bildet einen Teil eines Regelventils 6 und ist mit Hilfe eines Regelventilstößels 7 verschließbar. Der Regelventilstößel 7 ist über einen an den Kopf des Regelventilstößels 7 anschließenden und an seinem entgegengesetzten Ende an der Wand der Regelventilkammer 3 angebrachten Regelventilbalg 8 nach außen abgedichtet. Ein Druckmesser 9 mißt den Druck im Inneren der Vorkammer 5. Der Meßausgang des Druckmessers 9 ist an einen in der Zeichnung nicht dargestellten Druckregler angeschlossen, der nach Vergleich des gemessenen Druckwertes mit einem Sollwert das Regelventil 6 entsprechend betätigt.

Die Vorkammer 5 ist über eine Speisedrossel 10 an eine Versorgungsleitung 11 angeschlossen, die zu einem in der Zeichnung nicht dargestellten Beschichtungsbehälter für das zur Beschichtung vorgesehene Material führt. Die Versorgungsleitung 11 ist in Richtung eines Pfeiles 12 von einem Trägergas durchströmt. Die Speisedrossel 10 bildet einen Teil eines Speiseventils 13 und ist über einen in der Versorgungsleitung 11 angeordneten Speiseventilstößel 14 verschließbar, der nach außen hin über einen an den Kopf des Speiseventilstößels 14 anschließenden und an seinen entgegengesetzten Ende an der Wand der Versorgungsleitung 11 angebrachten Speiseventilbalg 15 abgedichtet ist.

Das Reaktionsgas aus der Gasquelle strömt entlang dem Pfeil 16 in die Regelventilkammer 3 ein. Der Druckregler für das Regelventil 6 vergleicht den Meßwert des Druckes in der Vorkammer 5 mit einem entsprechenden Sollwert und stellt das Regelventil 6 über eine Betätigungskraft 17 so nach, daß der Druck in der Vorkammer 5 auf seinem Sollwert gehalten wird. Damit die Druckregelung schnell genug ist, wird die Öffnung der Regeldrossel 4 größer als die Öffnung der Speisedrossel 10 gewählt. Typischerweise liegt der Druck in der Vorkammer 5 im Bereich von 10 bis 1000 Millibar, so daß die freie Weglänge der Gasmoleküle im Bereich der Innenabmessungen der Vorkammer 5 liegt.

Die Speisedrossel 10, die durch eine Öffnung in einem gemeinsamen Wandabschnitt von Vorkammer 5 und Versorgungsleitung 11 gebildet ist, läßt einen dem Druck in der Vorkammer 5 proportionalen Gasfluß in die Versorgungsleitung 11 strömen. Das in die Versorgungsleitung 11 eingeströmte Gas wird dann durch den Trägergasstrom 12 in Richtung des Beschichtungsbehälters befördert. Die Proportionalität gilt, solange der Druck in der Vorkammer 5 mindestens doppelt so groß wie der Druck im Beschichtungsbehälter ist. Ist die Temperatur der Gaseinlaßvorrichtung 1 und insbesondere der Vorkammer 5 nicht konstant, so muß die Temperatur der Vorkammer 5 gemessen werden und ihr quadratwurzelförmiger Einfluß auf den Gasfluß berücksichtigt werden. Dies kann auf automatischem Wege erfolgen, wenn ein intelligenter Druckregler zum Betätigen des Regelventils 6 vorgesehen ist, der den Druck in der Vorkammer 5 in Abhängigkeit von deren Temperatur so einstellt, daß sich an der Speisedrossel 10 der gewünschte Gasfluß einstellt.

Für die Funktion der Gaseinlaßvorrichtung 1 ist die Anordnung des Regelventilstößels 7 und des Speiseventilstößels 14 wesentlich. Da sich der Regelventilstößel 7 und der Speiseventilstößel 14 außerhalb der Vorkammer 5 befinden, wird beim Betätigen des Regelventilstößels 7 und des Speiseventilstößels 14 das Volumen der Vorkammer 5 und damit deren Innendruck nicht verändert. Da die Druckschwankungen in der Vorkammer 5 klein sind, läßt sich der Druck in der Vorkammer 5 mit hoher Genauigkeit messen. Beispielsweise läßt sich ein kapazitiver Drucksensor als Druckmesser 9 verwenden, dessen mit dem Druck in der Vorkammer 5 zusammenhängender Kapazitätswert durch eine Meßbrücke meßbar ist. Da die Druckschwankungen in der Vorkammer 5 und damit die Schwankungen des Kapazitätswerts des kapazitiven Drucksensors klein sind, läßt sich an die Meßbrücke ein Meßverstärker mit großem Verstärkungsfaktor anschließen, der auch kleine Änderungen des Kapazitätswerts in verhältnismäßig große Spannungssignale umsetzt. Dadurch ist es möglich, den Druck in der Vorkammer 5 sehr genau zu regeln.

Außerdem müssen nach dem Schließen des Speiseventils 13 keine Totvolumina geleert oder nach Öffnen des Speiseventils 13 aufgefüllt werden, so daß der gewünschte Fluß sofort zur Verfügung steht. Dementsprechend kann der Gasfluß mit Hilfe der Speisedrossel 10 und dem Speiseventilstößel 14 augenblicklich unterbrochen und freigegeben werden. Dabei ist auch die große, dem Inneren der Versorgungsleitung 11 zugewandte Oberfläche des Speiseventilbalgs 15 nicht von Nachteil, da das in der Versorgungsleitung 11 strömende Trägergas diese Oberflächen dauernd freispült.

Fig. 2 zeigt ein abgewandeltes Ausführungsbeispiel der Gaseinlaßvorrichtung 1, die um ein Ablaßventil 19 ergänzt ist. Das Ablaßventil 19 ist von einer Ablaßdrossel 20 gebildet, die von einer Öffnung in der Wand der Vorkammer 5 gebildet ist. Die Ablaßdrossel 20 mündet in eine Ablaßkammer 21. In der Ablaßkammer 21 befindet sich ein Ablaßventilstößel 22, mit dem die Öffnung der Ablaßdrossel 20 mit Hilfe einer Betätigungskraft 23 verschließbar ist. Der Ablaßventilstößel 22 ist nach außen durch einen an den Kopf des Ablaßventilstößels 22 und an seinem entgegengesetzten Ende an die Wand der Ablaßkammer 21 angebrachten Ablaßventilbalg 24 abgedichtet.

Durch das Ablaßventil 19 ist es möglich, einen schnellen Übergang von einem hohen zu einem niedrigen Gasfluß zu bewerkstelligen. Durch das Ablaßventil 19 kann das in der Vorkammer 5 enthaltene Reaktionsgas in eine Ablaßleitung 25 in Richtung eines Pfeiles 26 abgelassen werden. Das Ablaßventil 19 wird unabhängig vom Betriebszustand des Speiseventils 13 nur kurzzeitig dann geöffnet, wenn eine Erniedrigung des Gasflusses erforderlich ist. Der dadurch entstehende Gasverlust ist vernachlässigbar klein.

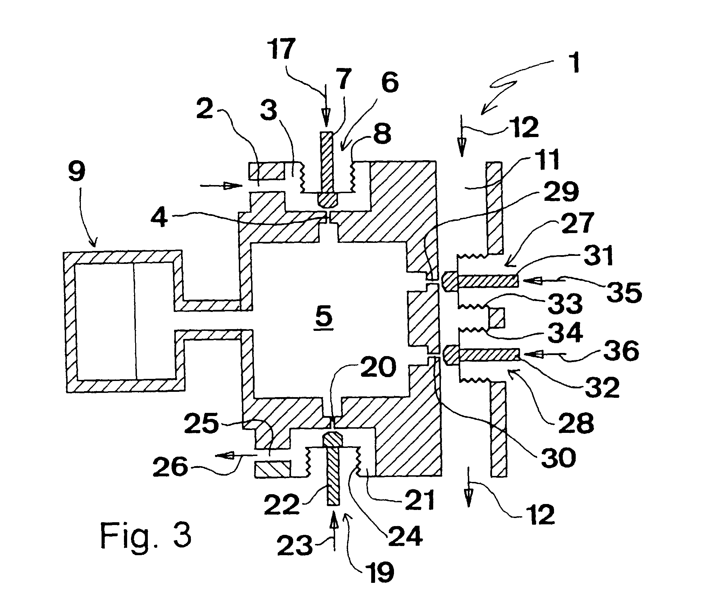

Fig. 3 zeigt ein weiteres Ausführungsbeispiel der Gaseinlaßvorrichtung 1, das zur Versorgungsleitung 11 hin ein erstes Speiseventil 27 und ein zweites Speiseventil 28 mit einer ersten und zweiten Speisedrossel 29 und 30 sowie einem ersten und zweiten Speiseventilstößel 31 und 32 aufweist. Der erste und der zweite Speiseventilstößel 31 und 32 sind nach außen jeweils über Speiseventilbälge 33 und 34 abgedichtet. Mit Hilfe einer ersten Betätigungskraft 35 und einer zweiten Betätigungskraft 36 sind sowohl das erste Speiseventil 27 als auch das zweite Speiseventil 28 verschließbar. Die Öffnung der ersten Speisedrossel 29 und der zweiten Speisedrossel 30 sind unterschiedlich groß gewählt, so daß unterschiedliche Flußwerte durch Öffnen von beiden Speiseventilen 27 und 28 oder eines der beiden Speiseventile 27 und 28 möglich sind.

Es sei angemerkt, daß sich die Öffnungen der Regeldrossel 4, der Ablaßdrossel 20 sowie der Speisedrosseln 10, 29 und 30 durch in den Grundkörper der Vorkammer 5 einschraubbare Blenden bewerkstelligen lassen. Auf diese Weise lassen sich das Regelventil 6, das Ablaßventil 19 und die Speiseventile 13, 27 und 28 an unterschiedliche Flußwerte anpassen. Sinnvollerweise sind dann auch der Regelventilstößel 7, der Ablaßventilstößel 22 sowie die Speiseventilstößel 14, 31 und 32 zusammen mit dem Regelventilbalg 8, dem Ablaßventilbalg 24 und den Speiseventilbälgen 15, 33 und 34 abschraubbar gestaltet, so daß die Drosselblenden, wenn diese gewechselt werden sollen, von der Außenseite leicht zugänglich sind.

Weiterhin ist es grundsätzlich möglich, mehrere als Speisedrosseln dienende Öffnungen von unterschiedlicher Größe vorzusehen. Eine erste Speisedrossel ist beispielsweise so bemessen, daß sich durch die erste Speisedrossel ein Fluß F ergibt. Eine zweite Speisedrossel liefert einen Fluß 2F und eine dritte Speisedrossel einen Fluß von 4F. Mit dieser Anordnung von Speisedrosseln lassen sich acht Flußwerte zwischen OF und 7F in Stufen von 1F einstellen.

## Patentansprüche

1. Gaseinlaßvorrichtung für eine Beschichtungsanlage, die ein Gasreservoir (5) aufweist, das über eine Speisekanalanordnung an einen Einspeiseraum (11) angeschlossen ist, und deren Speisekanalanordnung vom Einspeiseraum (11) aus durch eine zugeordnete Speiseventilanordnung (14, 15, 31, 32, 33, 34) verschließbar ist, **dadurch gekennzeichnet**, daß die Speisekanalanordnung als Speisedrosselanordnung (10, 29, 30) ausgebildet ist und daß der Gasdruck in dem Gasreservoir (5) mit Hilfe eines den Gasdruck in dem Gasreservoir (5) messenden Druckmessers (9) und einer an eine Gasquelle angeschlossenen Regeldrosselanordnung (4), die von außen durch eine vom Druckmesser (9) gesteuerte Regelventilanordnung (7, 8) verschließbar ist, einstellbar ist.

2. Gaseinlaßvorrichtung nach Anspruch 1, dadurch gekennzeichnet, daß die Speisedrosselanordnung (10, 29, 30) wenigstens eine Öffnung aufweist, die in einem dem Einspeiseraum (11) und dem Gasreservoir (5) gemeinsamen Wandabschnitt ausgebildet ist.

3. Gaseinlaßvorrichtung nach Anspruch 1 oder 2, dadurch gekennzeichnet, daß die Regeldrosselanordnung (4) wenigstens eine in die Wand des Gasreservoirs (5) eingebrachte Öffnung aufweist.

4. Gaseinlaßvorrichtung nach Anspruch 3, dadurch gekennzeichnet, daß der Gesamtquerschnitt der Öffnungen der Regeldrosselanordnung (4) größer als der Gesamtquerschnitt der Öffnungen der Speisedrosselanordnung (10, 29, 30) ist.

5. Gaseinlaßvorrichtung nach einem der vorstehenden Ansprüche, dadurch gekennzeichnet, daß das Gasreservoir (5) eine Ablaßdrosselanordnung (20) aufweist, die über wenigstens eine in die Wand des Gasreservoirs (5) eingebrachte und von außen durch eine Ablaßventilanordnung (22, 24) verschließbare Öffnung verfügt.

6. Gaseinlaßvorrichtung nach einem der vorstehenden Ansprüche, dadurch gekennzeichnet, daß die Speiseventilanordnung wenigstens einen Speiseventilstößel (14, 31, 32) aufweist, mit dem die Öffnung der zugeordneten Speisedrossel (10, 29, 30) verschließbar ist, und der nach außen durch einen an dem Kopf des Speiseventilstößels (14, 31, 32) angebrachten und an seinem entgegengesetzten Ende an der Wand des Einspeiseraumes (11) befestigten Speiseventilbalg (15, 33, 34) abgedichtet ist.

7. Gaseinlaßvorrichtung nach einem der vorstehenden Ansprüche, dadurch gekennzeichnet, daß die Regelventilanordnung wenigstens einen Regelventilstößel (7) aufweist, durch den die außenseitige Eintrittsöffnung der zugeordneten Regeldrossel (4) verschließbar ist, und der nach außen durch einen an den Kopf des Regelventilstößels (7) anschließenden und an seinem entgegengesetzten Ende an der Wand einer Zuleitung (2) befestigten Regelventilbalg (8) abgedichtet ist.

8. Gaseinlaßvorrichtung nach einem der vorstehenden Ansprüche, dadurch gekennzeichnet, daß die Ablaßventilanordnung wenigstens einen Ablaßventilstößel (22) aufweist, mit dem die außenseitige Öffnung der zugeordneten Ablaßdrossel (20) verschließbar ist, und der nach außen durch einen an den Kopf des Ablaßventilstößels (22) anschließenden und an seinem entgegengesetzten Ende an der Wand einer Ablaßleitung (25) befestigten Ablaßventilbalg (24) abgedichtet ist.

9. Gaseinlaßvorrichtung nach einem der vorstehenden Ansprüche, dadurch gekennzeichnet, daß der Druckmesser (9) ein kapazitiver Drucksensor ist, der über einen Regler die Regelventilanordnung (7, 8) steuert.

10. Gaseinlaßvorrichtung nach Anspruch 9, dadurch gekennzeichnet, daß ein Temperaturmeßfühler die Temperatur des Gasreservoirs (5) mißt und ein Ausgangssignal an den Regler abgibt, der für einen konstanten Gasfluß in den Einspeiseraum (11) den Druck in dem Gasreservoir (5) entsprechend der Temperatur des Gases in dem Gasreservoir (5) einstellt.

11. Gaseinlaßvorrichtung nach Anspruch 9 oder 10, dadurch gekennzeichnet, daß der Regler den Druck in dem Gasreservoir (5) auf einen Wert einstellt, der wenigstens gleich dem Doppelten des Druckes im Einspeiseraum (11) ist.

## Claims

1. Gas inlet device for a coating system, comprising a gas reservoir (5) connected, via a supply duct system to a feeder space (11), and wherein the supply duct system is adapted to be closed from said feeder space (11) by means of an associated supply valve system (14, 15, 31, 32, 33, 34), **characterised** in that said supply duct system is configured as feeder throttle system (10, 29, 30), and that the gas pressure in said gas reservoir (5) is adapted to be adjusted by means of a pressure gauge (9) measuring the gas pressure in said gas reservoir (5) and by means of a regulating throttle system (4) connected to a gas source, which is adapted to be closed from outside by a control valve system (7, 8) controlled by said pressure gauge (9).

2. Gas inlet device according to Claim 1, characterised in that said feeder throttle system (10, 29, 30) comprises at least one opening which is formed in a common wall section shared by said feeder space (11) and said gas reservoir (5).

3. Gas inlet device according to Claim 1 or 2, characterised in that said regulating throttle system (4) presents at least one opening formed in the wall of said gas reservoir (5).

4. Gas inlet device according to Claim 3, characterised in that the total of the cross-sections of the apertures of said regulating throttle system (4) exceeds the total of the cross-sections of the openings of said feeder throttle system (10, 29, 30).

5. Gas inlet device according to any of the preceding Claims, characterised in that said gas reservoir (5) comprises a drain throttle system (20) which is provided with at least one opening formed in the wall of said gas reservoir (5) and adapted to be closed from the outside by a drain valve system (22, 24).

6. Gas inlet device according to any of the preceding Claims, characterised in that said supply valve system comprises at least one supply valve tappet (14, 31, 32) adapted to close the aperture of the associated feeder throttle (109, 29, 30), which is sealed from the outside by a supply valve bellows element (15, 33, 34) mounted on the head of said supply valve tappet (14, 31, 32) and fastened, by its opposite end, on the wall of said feeder space (11).

7. Gas inlet device according to any of the preceding Claims, characterised in that said control valve system comprises at least one control valve tappet (7) adapted to close the outside inlet opening of the associated regulating throttle (4), which is sealed from the outside by a control valve bellows element (8) joining the head of said control valve tappet (7) and mounted, by its opposite end, on the wall of a feeder duct 2.

8. Gas inlet device according to any of the preceding Claims, characterised in that said drain valve system comprises at least one drain valve tappet (22) adapted to close the outside opening of the associated drain throttle (20), which is sealed from the outside by a drain valve bellows element (24) joining the head of said drain valve tappet (22) and mounted, by its opposite end, on the wall of a drain line (25).

9. Gas inlet device according to any of the preceding Claims, characterised in that said pressure gauge (9) is a capacitive pressure sensor controlling, via a regulator, said control valve system (7, 8).

10. Gas inlet device according to Claim 9, characterised in that a temperature sensor measures the temperature of said gas reservoir (5) and produces an output signal to said regulator which sets the pressure in said gas reservoir (5) in correspondence with the temperature of the gas in said gas reservoir (5) so as to achieve a constant gas flow entering said feeder space (11).

11. Gas inlet device according to Claim 9 or 10, characterised in that said regulator sets the pressure in said gas reservoir (5) to a level which equals at least twice the level of the pressure prevailing in said feeder space (11).

## Revendications

1. Dispositif d'admission de gaz pour une installation d'application de revêtement, qui comprend un réservoir à gaz (5), lequel est raccordé via un agencement de canaux d'admission à une chambre d'admission (11), et dont l'agencement de canaux d'admission est susceptible d'être obturé depuis la chambre d'admission (11) au moyen d'un agencement de soupape d'admission associé (14, 15, 31, 32, 33, 34), caractérisé en ce que l'agencement de canaux d'admission est réalisé sous forme d'un agencement à étranglement d'admission (10, 29, 30), et en ce que la pression du gaz dans le réservoir à gaz (5) est susceptible d'être réglée, avec l'aide d'un détecteur de pression (9) qui mesure la pression du gaz dans le réservoir à gaz (5), et d'un agencement d'étranglement de régulation (4), raccordé à une source de gaz et susceptible d'être obturé depuis l'extérieur au moyen d'un agencement de soupape de régulation (7, 8) commandé par le détecteur de pression (9).

2. Dispositif d'admission de gaz selon la revendication 1, caractérisé en ce que l'agencement d'étranglement d'admission (10, 29, 30) comporte au moins une ouverture, laquelle est réalisée dans un tronçon de paroi commun à la chambre d'admission (11) et au réservoir à gaz (5).

3. Dispositif d'admission de gaz selon l'une ou l'autre des revendications 1 et 2, caractérisé en ce que l'agencement d'étranglement de régulation (4) comporte au moins une ouverture ménagée dans la paroi du réservoir à gaz (5).

4. Dispositif d'admission de gaz selon la revendication 3, caractérisé en ce que la section totale des ouvertures de l'agencement d'étranglement de régulation (4) est supérieure à la section totale des ouvertures de l'agencement d'étranglement d'admission (10, 29, 30).

5. Dispositif d'admission de gaz selon l'une des revendications précédentes, caractérisé en ce que le réservoir à gaz (5) comporte un agencement d'étranglement d'échappement (20) qui dispose d'au moins une ouverture ménagée dans la paroi du réservoir à gaz (5), et qui est susceptible d'être obturé depuis l'extérieur au moyen d'un agencement de soupape d'échappement (22, 24).

6. Dispositif d'admission de gaz selon l'une des revendications précédentes, caractérisé en ce que l'agencement de soupape d'admission comporte au moins un poussoir de soupape d'admission (14, 31, 32), au moyen duquel l'ouverture de l'étranglement d'admission associé (10, 29, 30) est susceptible d'être obturée, et qui est étanché vers l'extérieur au moyen d'un soufflet (15, 33, 34) monté sur la tête du poussoir (14, 31, 32) de soupape d'admission et fixé à son extrémité opposée contre la paroi de la chambre d'admission (11).

7. Dispositif d'admission de gaz selon l'une des revendications précédentes, caractérisé en ce que l'agencement de soupape de régulation comporte au moins un poussoir (7) de soupape de régulation, au moyen duquel l'ouverture d'entrée extérieure de l'étranglement de régulation associé (4) peut être obturée, et qui est étanché vers l'extérieur au moyen d'un soufflet (8) de soupape de régulation, raccordé à la tête du poussoir (7) de la soupape de régulation, et fixé à son extrémité opposée contre la paroi d'une conduite d'amenée (2).

8. Dispositif d'admission de gaz selon l'une des revendications précédentes, caractérisé en ce que l'agencement de soupape d'échappement comporte au moins un poussoir (22) de soupape d'échappement, au moyen duquel l'ouverture extérieure de l'étranglement d'échappement associé (20) peut être obturée, et qui peut être étanché vers l'extérieur au moyen d'un soufflet (24) de soupape d'échappement qui se raccorde à la tête du poussoir (22) de la soupape d'échappement et qui est fixé à son extrémité opposée contre la paroi d'une conduite d'échappement (25).

9. Dispositif d'admission de gaz selon l'une des revendications précédentes, caractérisé en ce que le détecteur de pression (9) est un capteur de pression capacitif, qui commande l'agencement de soupape de régulation (7, 8) par l'intermédiaire d'un régulateur.

10. Dispositif d'admission de gaz selon la revendication 9, caractérisé en ce qu'un capteur de mesure de température mesure la température du réservoir à gaz (5) et délivre un signal de sortie au régulateur, qui établit la pression dans le réservoir à gaz (5) en correspondance de la température du gaz dans le réservoir à gaz (5) pour un flux de gaz constant vers la chambre d'admission (11).

11. Dispositif d'admission de gaz selon l'une ou l'autre des revendications 9 et 10, caractérisé en ce que le régulateur établit la pression dans le réservoir à gaz (5) à une valeur qui est au moins égale au double de la pression dans la chambre d'admission (11).
